# EUROPEAN PATENT APPLICATION

(11) **EP 1 850 435 A1**
(43) Date of publication of application: **31.10.2007**
(21) Application number: 07075325.6
(22) Date of filing: 01.05.2007
(51) Int. Cl.: H02G 3/12

(54) **Box for electric wirings, provided with placement means**

(30) Priority: 28.04.2006 NL 1031723
(71) Applicant: ABB B.V., 6716 AA Ede (NL)
(72) Inventor: Renckens, Thomas Philippus, 3742 ND Baarn (NL)
(74) Representative: Bras, Pieter

(57) **Abstract**

Box for electric wirings, comprising a bottom wall and a circumferential wall, as well as securing means for securing the box in or on a wall, wherein the circumferential wall has been provided with retaining means for keeping the securing means in a desired active position, wherein the securing means comprise a first securing means in the form of an abutment means for in the active position thereof abutting the rear side of a hollow wall, retained against displacement towards the bottom by the retaining means, wherein the abutment means has been arranged near an end of a tearing strip, which tearing strip has been provided with a second securing means which in cooperation with mortar applied next to the circumferential wall keeps the box in an installation hole.

## Description

### BACKGROUND OF THE INVENTION

The invention relates to a box for electric wirings, which box can be placed in a wall.

Boxes to be placed in a hollow wall are known. An example thereof has been described in applicant's Dutch patent 1020862. The box has been provided with tearing strips or tearing bands, on which anchoring means have been provided. The tearing strips have furthermore been provided with lips provided with teeth, which lips are able to engage onto teeth in a channel formed in the box wall. At the end the tearing strips have been provided with a grip to be able to tighten the tearing strips manually, until the box has been clamped on the hollow wall, between the flange at the box opening and the anchoring members.

If the electrician has to carry out installation activities in another type of wall, such as a solid wall, and has to place a box therein, he needs to have another type of box at his disposal, namely a box known as a flush-type box.

If the installation activities have to be performed in different types of walls or partitions the electrician will have to keep as many types of boxes ready. This constitutes a logistic burden.

### SUMMARY OF THE INVENTION

It is an object of the invention to improve on this.

It is an object of the invention to provide a versatile box for electric wirings.

It is an object of the invention to provide a hollow-wall box that can be reliably and firmly secured in a hollow wall.

From one aspect the invention provides a box for electric wirings, comprising a bottom wall and a circumferential wall, as well as securing means for securing the box in or on a wall, wherein the circumferential wall has been provided with retaining means for keeping the securing means in a desired active position, wherein the securing means comprise a first securing means in the form of an abutment means for in the active position thereof abutting the rear side of a hollow wall, retained against displacement towards the bottom by the retaining means, wherein the abutment means has been arranged near an end of a tearing strip, which tearing strip has been provided with a finger grip that is flat with respect to the abutment means, for by pulling the tearing strip bringing the abutment means in the said active position, wherein the finger grip has been adapted for being retained in an active position against displacement towards the bottom by the retaining means at the circumferential wall, in which active position the finger grip is active as second securing means and in cooperation with mortar applied next to the circumferential wall keeps the box in an installation hole.

The hollow-wall box according to the invention thus can be placed and secured in both hollow walls and solid walls. The tearing strips, at least parts thereof, thus have a double function. The stock in depot and at work to be kept by the electrician can thus be limited.

In one embodiment the finger grip is situated at the end of the tearing strip that is opposite the end that has been provided with the abutment means.

Securing using mortar is enhanced when the finger grip defines a radially freely accessible hole.

For keeping the finger grip in its place at the box, the retaining means for the finger grip may form a meshing, which meshing preferably is active in a blocking manner in a direction towards the bottom and not in opposite direction. The retaining means may comprise a lip on the finger grip, preferably a resilient lip, provided with a tooth, and one or more counter teeth on the circumferential wall of the box.

The anchoring in the mortar and/or in the hole of the solid wall may be enhanced when the finger grip has been provided with an abutment or damming edge oriented away from the bottom.

In one embodiment the finger grip has been provided with one or more protrusions, extending substantially in circumferential direction, and forming a support surface for a finger and which may project on either side of the finger grip. For improving the grip the protrusions for pulling may have a concave edge facing the bottom.

In one embodiment the protrusions project on either side of the finger grip.

In order to facilitate the insertion into wall holes, the protrusion may have a curvature along with the circumferential wall.

Anchoring in the mortar may be enhanced when the orientation of the finger grip in the active position is opposite its orientation during tightening the tearing strip, particularly in case of the concave edges for the fingers.

In one embodiment the finger grip and the circumferential wall have been provided with mutually cooperating guiding means for guiding the displacement of the finger grip along the circumferential wall, in a direction substantially transversely away from the bottom.

The finger grip may be connected to the tearing strip by means of a connection that can be broken. In that way the finger grip can be made free as a separate part to be placed on the box to be used as a flush-type box.

From a further aspect the invention provides a box for electric wirings, comprising a bottom wall and a circumferential wall, as well as securing means for securing the box in or on a wall, wherein the circumferential wall has been provided with retaining means for keeping the securing means in a desired active position, wherein the securing means comprise an abutment means for in the active position thereof abutting the rear side of a hollow wall, retained against displacement towards the bottom by the retaining means, wherein the abutment means has been arranged near an end of a tearing strip, which tearing strip has been provided with a pulling end, for by pulling the tearing strip bringing the abutment means in the said active position, wherein the abutment means has at least one abutment arm projecting from the tearing strip, at the end of which abutment arm an abutment member, such as an abutment surface or anchoring tooth, has been provided.

Due to the location of the abutment member, such as abutment surface or anchoring tooth, spaced apart from the centre line of the actual tearing strip a moment can be generated when tightening the tearing strip, as a result of which the anchoring force can be high. The stability is also enhanced when the abutment means has two abutment arms extending in opposite direction.

When the arm or arms is/are resilient, a pre-stress can be built up during pulling. The box is then as it were tensioned fixed onto the wall.

This tensioning effect can be enhanced when the arm is concave the concave side facing away from the bottom.

At the location of the beginning of the arm, the abutment means may have an abutment tooth, with which in an embodiment with the two arms optionally, depending on the flexibility of the arms, support takes place at three points against the wall.

In a manner known per se the retaining means for the abutment means may form a meshing, which meshing is active in a blocking manner in a direction towards the bottom and not in opposite direction. The retaining means may in that case comprise a lip on the abutment means, preferably a resilient lip, provided with a tooth, and one or more counter teeth on the circumferential wall of the box.

With such a meshing located between, preferably in between, the engagement of the teeth on the said two arms and therefore engaging onto the counter force in between the supporting force against the inside of the wall, a highly stable, tilt-free anchoring of the box can be achieved.

In a combined embodiment with the finger grip according to the invention as described above, the counter teeth on the box may also be active on the lip at the finger grip.

The abutment means may be connected to the tearing strip by means of a connection that can be broken.

From a further aspect the invention provides a box for electric wirings, comprising a bottom wall and a circumferential wall, as well as means for securing the box in or on a wall, wherein the circumferential wall has been provided with means for keeping the securing means in a desired active position, wherein the securing means comprise a first securing means in the form of an abutment means for in the active position thereof abutting the rear side of a hollow wall, retained against displacement towards the bottom by the retaining means, wherein the abutment means has been arranged near an end of a tearing strip, which tearing strip has been provided with a second securing means which in cooperation with mortar applied next to the circumferential wall keeps the box in an installation hole.

In one embodiment the second securing means forms a framework, which enhances the anchoring, optionally also in circumferential direction of the box.

In one embodiment the framework is situated at the pulling end of the tearing strip, and preferably detachably connected to the rest of the tearing strip.

The aspects and measures described in this description and claims of the application and/or shown in the drawings of this application may where possible be used either in combination with or individually from each other. Said individual aspects may be the subject of divisional patent applications relating thereto. This particularly applies to the measures and aspects described per se in the sub claims.

### SHORT DESCRIPTION OF THE DRAWINGS

The invention will be elucidated on the basis of a number of exemplary embodiments shown in the attached drawings, in which:
Figures 1 A-C show an exemplary embodiment of a box according to the invention, in perspective view, side view and top view, respectively;
Figures 2A-C show a tearing strip to be used with the box of figures 1 A-C, in perspective view, front view and side view, respectively;
Figure 3A shows a combination of the box of figures 1 A-C and two tearing strips according to figures 2A-C;
Figure 3B shows the box of figure 3A when placed in a hole of a hollow wall;
Figures 4A and 4B show the box of figure 3B in a final stage of attachment to a hollow wall;
Figure 5 shows the box of figure 3B, when completing the attachment to the hollow wall;
Figures 6A-C show the box of figure 1A-C, showing a part of the tearing strip according to figures 2A-C twice, before placing in a solid wall, and after placing in a hole in a solid wall, respectively, in two side views that are perpendicular to each other;
Figure 6D shows a cross-section of the box of figures 6A-C; and
Figure 6E shows a detail of a cross-section in a plane parallel to the bottom of the box of figures 6A-D.

### DETAILED DESCRIPTION OF THE DRAWINGS

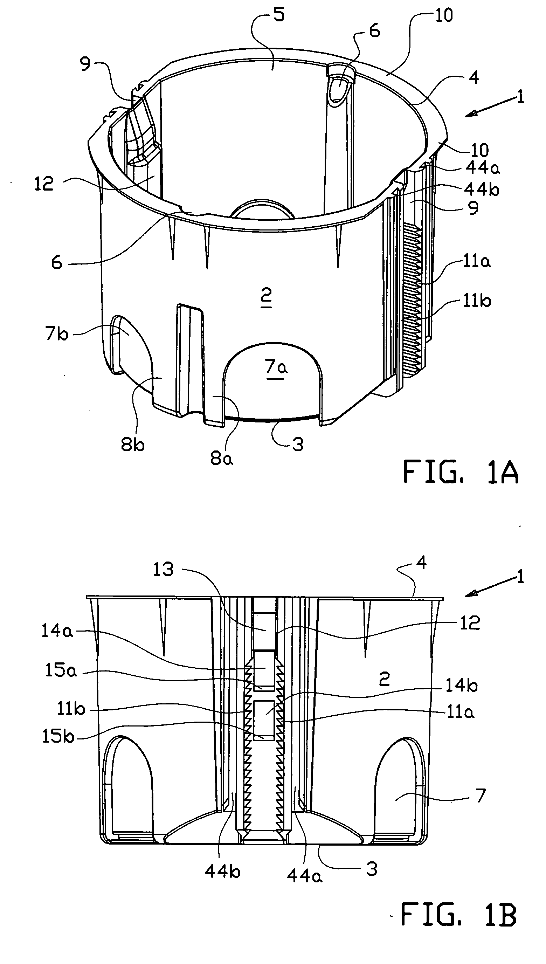

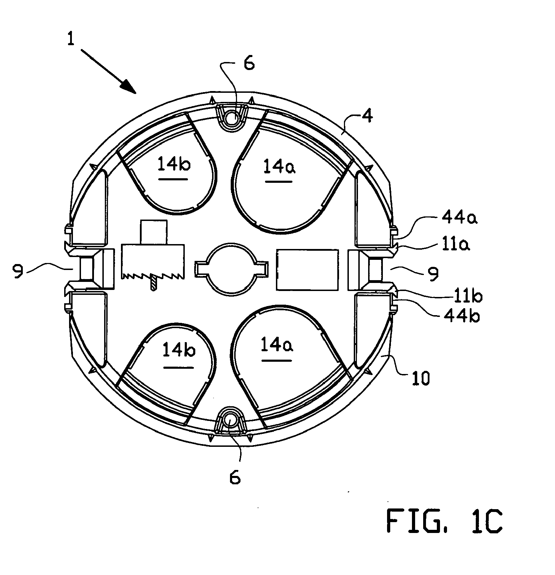

The box of figure 1 A-C is generally referred to by 1 and comprises a circumferential wall 2 and bottom wall 3 integrally formed therewith. At the side facing away from the bottom 3, the circumferential wall 2 changes into an upper edge 4, which defines an access opening 5 to the inside of the box. The upper edge 4 has been provided with a flange 10. Contiguous to the bottom break-through gates 7a, 7b have been provided in the circumferential wall 2. In a comparable manner, break-through gates 14a, 14b have been provided in the bottom 3 (figure 1C). The box 1 has been integrally formed from a synthetic material.

For attachment of components mounting holes 6 have been integrally formed at the inside of the circumferential wall 2. At two opposite sides of the circumferential wall 2, channels 9 extending perpendicular to the bottom 3, have been integrally formed. Said channels 3 have been provided with racks 11a, 11b in two opposite channel planes, as has also been shown in applicant's Dutch patent 1020862.

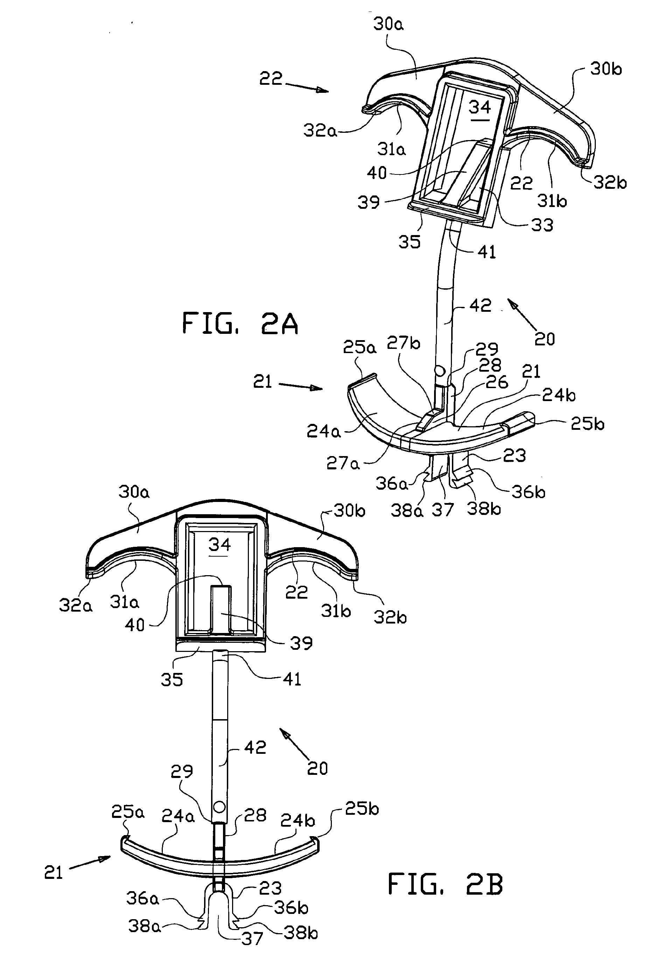

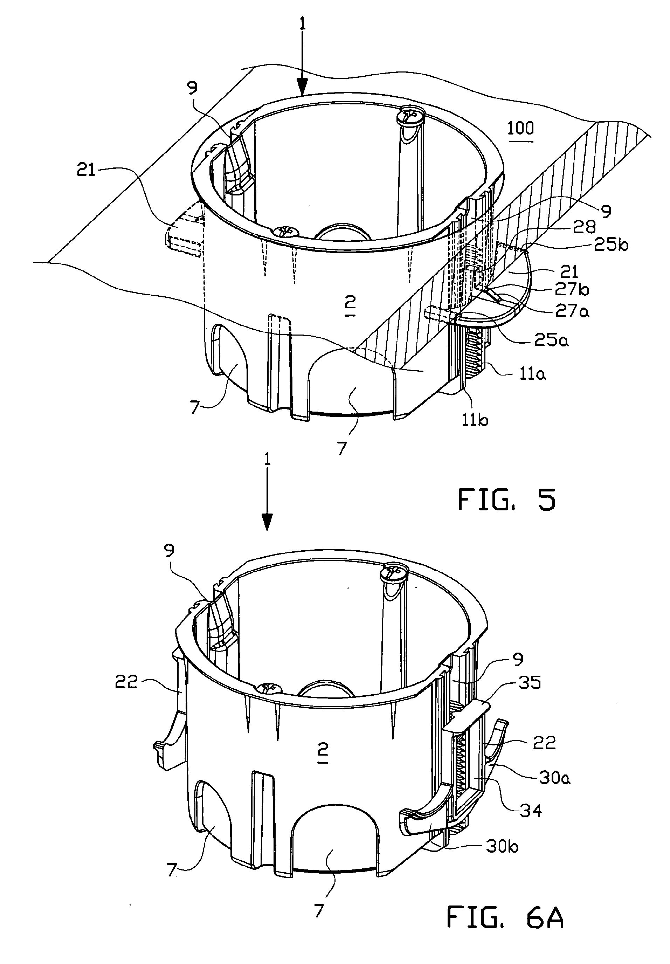

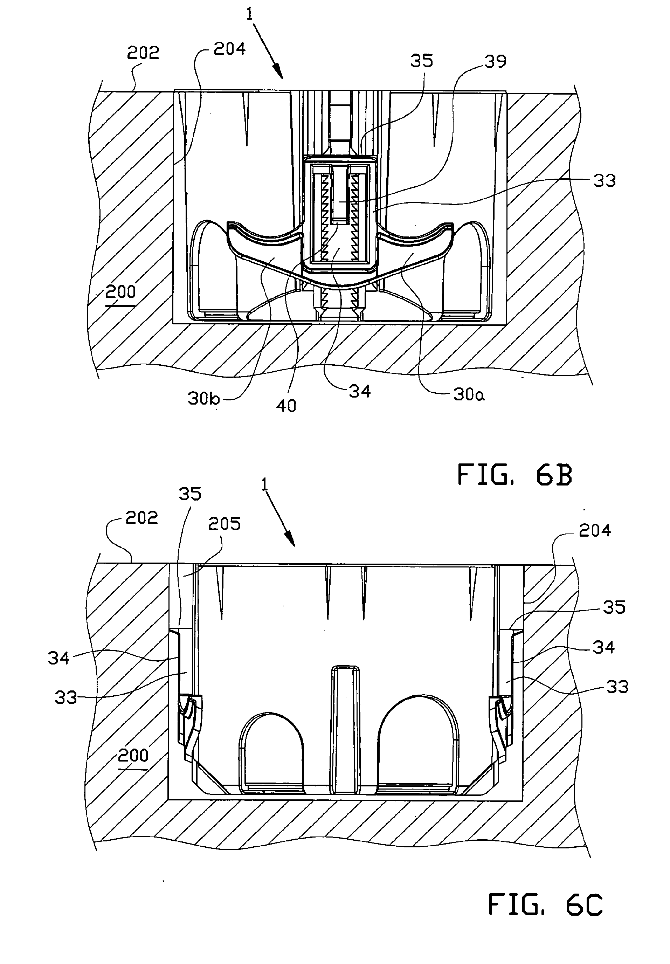

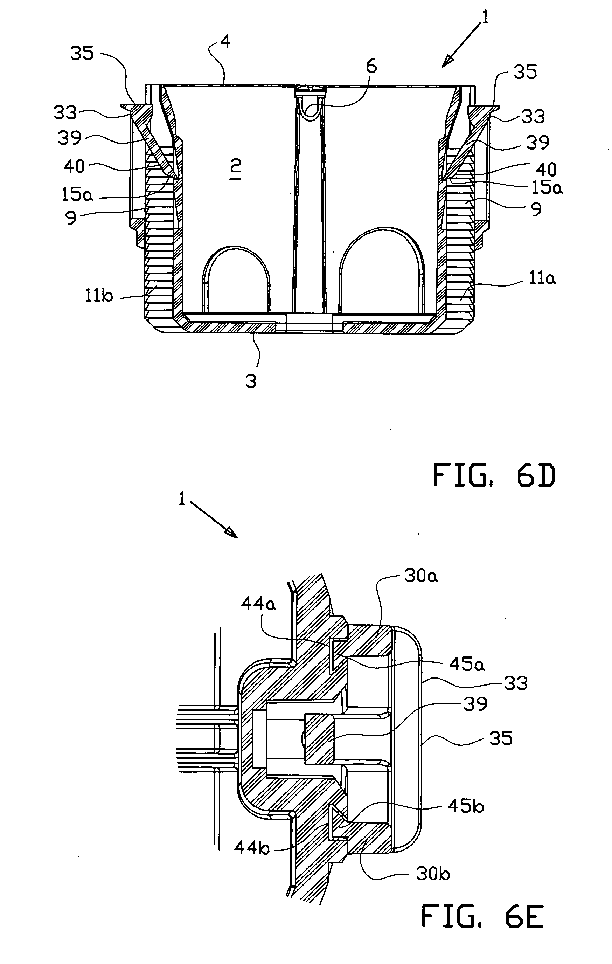

As can be seen in figure 1 B the teeth of the racks 11 a, 11 b have been formed with stopping planes that face away from the bottom 3. The planes 12 above the racks 11 a, 11 b are flat. The bottom 13 of the channels 9 has also been provided with teeth 15a, 15b, which have also been provided with stopping planes at the side facing away from the bottom 3, and above it have been provided with guiding surfaces 14a, 14b. Below the tooth 15b a level bottom section 16 of channel 9 has been provided. At the upper end and at the lower end the channel 9 is open. Adjacent to each channel 9 two grooves 44a, 44b have been arranged in the circumferential wall 2, also see figure 6E. The tearing strip 20 of figures 2A-C has been integrally formed from a synthetic material.

Near the lower end the tearing strip 20 has been formed with an anchoring plate 21 (first securing means), having two sidewardly extending arms 24a, 24b, which at the ends have been provided with teeth 25a, 25b. At the location of the connection of the anchoring plate 21 to the rest of the tearing strip 20, a reinforcement 26 has been provided, having an inclined surface 27a and a straight surface 27b, which plane is perpendicular to the main direction of the tearing strip 20. At the bottom side of the anchoring plate 21 a U-shaped anchoring member 23 has been integrally formed, having legs 36a, 36b, on which teeth 38a, 38b have been formed. Between the legs 36a, 36b there is a free space 37 in order to let the legs 36a, 36b be able to spring towards each other.

The anchoring plate 21 and anchoring member 23 have been integrally formed at the lower end of a shank 42, via protrusion 28. The transition between protrusion 28 and shank 42 has been provided with a break connection.29.

At the opposite end of the shank 42 a grip member 22 (second securing means) has been integrally formed, having a framework 33 defining an opening 34. At the end of the tearing strip 20 the grip member 22 has been provided with two sidewardly extending arms 30a, 30b, which at their edge facing the anchoring plate 21 have been provided with hollow edges 31 a, 31 b for the fingers to be placed on. The edges 31 a, 31 b merge into corners 32a, 32b. The framework 33 and the arms 22 extend substantially in the same plane, and thus define a flat shape of the grip member 22.

At the side facing the anchoring plate, the framework 33 has been provided with a projecting damming edge 35. From said side of the framework 33 a resilient lip 39, at its end provided with a tooth 40, extends inwardly inclined and away from the damming edge 35. As can also be seen in figure 6E two guiding ribs 45a, 45b have been formed on the framework 33.

The grip member 22 has been connected to the flexible shank 42 by means of a break connection 41.

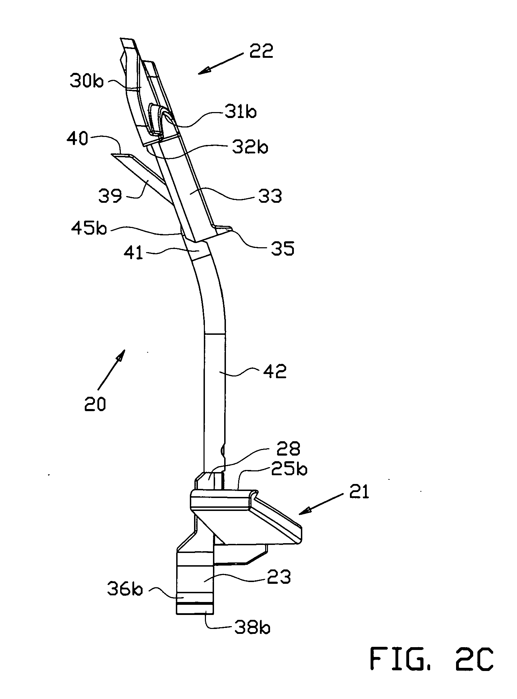

As can be seen in figure 2C the tearing strip 20 is slightly curved, wherein at the concave side the resilient lip 39 projects and also the anchoring member 23 projects. The anchoring plate 21 projects to the convex side, just like the abutment edge 35. It can also be seen that the arms 30a, 30b are slightly curved about a centre line parallel to the tearing strip.

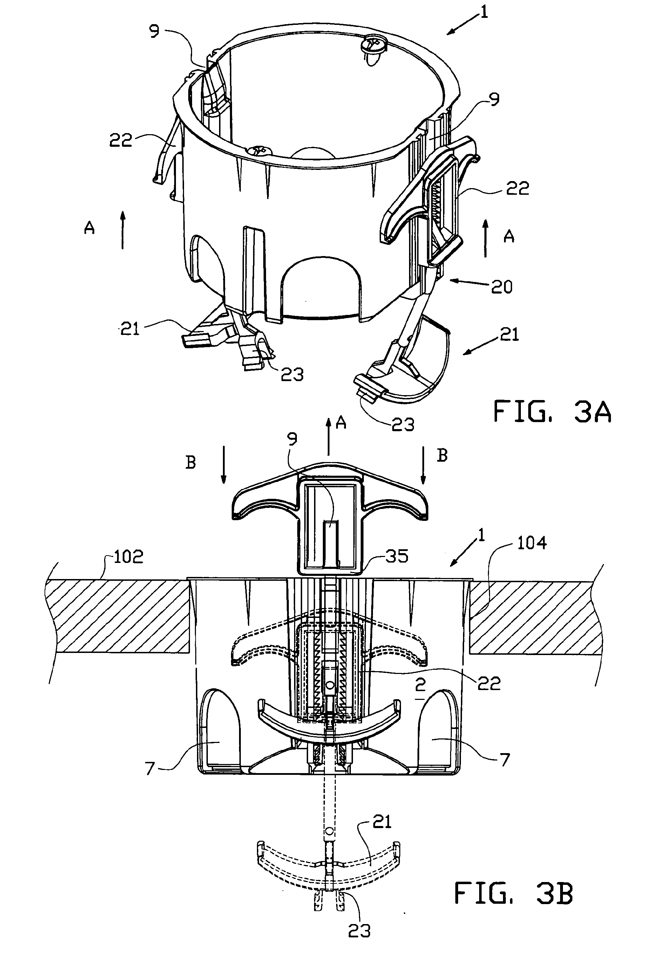

The electrician is offered the box 1 having two tearing strips 20, in the condition shown in figure 3A. For that purpose the tearing strips 20 have been inserted from the bottom side up in the direction A, wherein the ribs 45a, 45b are guidingly accommodated in the grooves 44a, 44b. Due to the guiding ribs 45a, 45b inter-engaging in the grooves 44a, 44b, the grip member 22 cannot move radially outward. The grip member 22 sliding back with respect to the circumferential wall 2 is counteracted because the resilient lip 39 is tensioned against the bottom of channel 9 with the end 40.

The box 1 can be placed, in this example, in a hole 104 of a hollow wall 100 shielding a cavity 103. For that purpose the box 1 is inserted in the direction B into the hole 104 of the wall 100. Due to the curved and flexible embodiment of the tearing strips 20, the anchoring plates 21 remain within the hole cross-section, or they can easily be moved through it. When the damming edges 35 contact the surface 104, in case of further insertion of the box, the tearing strips 20 will remain in their places against the wall (moving in direction A with respect to the box) until the edge 4 with flange 10 abuts the outer surface 102 of the wall 100. The grip member 22 extend beyond the wall, so that the edges 31 a,b are properly accessible.

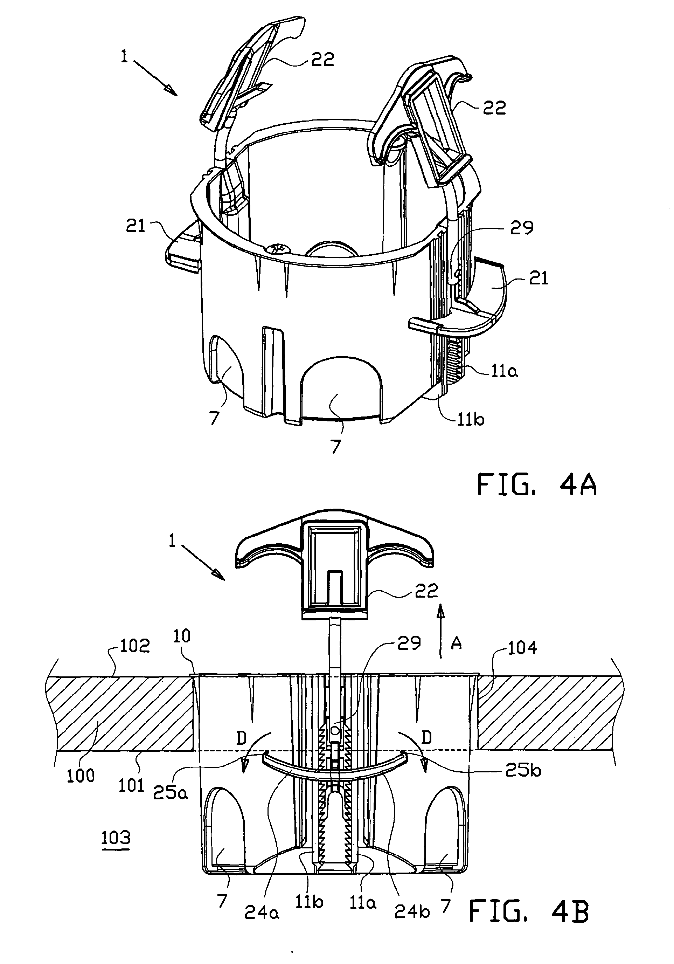

Subsequently the electrician places his fingers against the edges 31 a, b and pulls them in the direction A (figure 4B), until the ends (in this example teeth 25a,b) of the arms 24a,b, which ends are closer to the wall than the connection of the arms with the rest of the tearing strip 20, abut the inner surface 101 of the wall 100. In that displacement of the tearing strip 20 with respect of the box 1, the teeth 38a, b have also entered into engagement with the teeth of the racks 11a, b, and they rattle along them. By subsequently tightening the tearing strip 20 a little further, the arms 24a, b will be slightly bent in the direction D, as a result of which a tensile force is generated in the anchoring plate 21. This position is secured by the engagement of the teeth 38a, b onto the racks 11 a, b considered horizontally in between both arm ends, such as teeth 25a, b, as a result of which a highly stable, tilt-proof placement has been achieved. Optionally (depending on the flexibility of the arms 24a, b) pulling can take place until also the little surface 27b abuts the inner surface 101.

Finally the box 1 has been secured onto the wall 100, by on the one hand the flange 10 and on the other hand the anchoring plate 21. The electrician may subsequently by manipulating the grip member 22, preferably by rotating it about the main direction of the tearing strip 20, or tightening firmly, have the transition 29 collapse. The situation shown in figure 5 has then been achieved.

The combination of the box of figures 1 A-C and tearing strips of figures 2A-C can also be used to use the box 1 as a flush-type box. For that purpose the grip member 22 is given another function, after having it broken off at the location of transition 41 or pulled off from the rest of the tearing strip 20. Subsequently the grip member 22 in opposite orientation and with the concave side of the bent arms 30a, 30b is turned to the circumferential wall 2, with the ribs 45a, 45b inserted into the channels 44a, 44b. This takes place from the bottom up, so that the resilient lip 39 with the tooth 40 is able to move over the tooth 15b. The grip member 22 can then be placed in two positions along the channel, in a position with tooth 40 abutting tooth 15b or in a position with tooth 40 abutting tooth 15a, shown in figure 6D. In that condition the box 1 can be placed in a hole 204 of a solid wall 200, until the bottom 3 abuts the bottom of the hole 204 or the flange 10 abuts the surface 202 of the wall 200.

Depending on the fit the electrician may either beforehand or afterwards apply mortar (daubing) in the (subsequent) space between the wall of the hole 204 and the circumferential wall 2 of the box, particularly at the level of the channels 9. Said mortar gets into the hole 34 of the framework 33, above the arms 30a, 30b, and above the damming edge 35, which also in that case has a function. After the mortar has hardened the box 1, then a flush-type box, is anchored against taking it out of the hole 204. Tensile forces on the box 1 are transferred via the lip 39 to the grip member 22 and the mortar onto the wall 200.

The above description is included to illustrate the operation of preferred embodiments of the invention and not to limit the scope of the invention. Starting from the above explanation many variations that fall within the spirit and scope of the present invention will be evident to an expert.

## Claims

1. Box for electric wirings, comprising a bottom wall and a circumferential wall, as well as securing means for securing the box in or on a wall, wherein the circumferential wall has been provided with retaining means for keeping the securing means in a desired active position, wherein the securing means comprise a first securing means in the form of an abutment means for in the active position thereof abutting the rear side of a hollow wall, retained against displacement towards the bottom by the retaining means, wherein the abutment means has been arranged near an end of a tearing strip, which tearing strip has been provided with a finger grip that is flat with respect to the abutment means, for by pulling the tearing strip bringing the abutment means in the said active position, wherein the finger grip has been adapted for being retained in an active position against displacement towards the bottom by the retaining means at the circumferential wall, in which active position the finger grip is active as second securing means and in cooperation with mortar applied next to the circumferential wall keeps the box in an installation hole.

2. Box according to claim 1, wherein the finger grip is situated at the end of the tearing strip that is opposite the end that has been provided with the abutment means, and/or wherein the finger grip defines a radially freely accessible hole.

3. Box according to claim 1 or 2, wherein the retaining means for the finger grip form a meshing, wherein the meshing preferably is active in a blocking manner in a direction towards the bottom and not in opposite direction, and/or wherein the retaining means preferably comprise a lip on the finger grip, preferably a resilient lip, provided with a tooth, and one or more counter teeth on the circumferential wall of the box.

4. Box according to any one of the preceding claims, wherein the finger grip has been provided with an abutment or damming edge oriented away from the bottom, and/or wherein the finger grip has been provided with one or more protrusions, extending substantially in circumferential direction, and forming a support surface for a finger, wherein the protrusions for pulling preferably have a concave edge facing the bottom.

5. Box according to claim 4, wherein the protrusions project on either side of the finger grip, and/or wherein the protrusion has a curvature along with the circumferential wall.

6. Box according to any one of the preceding claims, wherein the orientation of the finger grip in the active position is opposite its orientation during tightening the tearing strip.

7. Box according to any one of the preceding claims, wherein the finger grip and the circumferential wall have been provided with mutually cooperating guiding means for guiding the displacement of the finger grip along the circumferential wall, in a direction substantially transversely away from the bottom.

8. Box according to any one of the preceding claims, wherein the finger grip has been connected to the tearing strip by means of a connection that can be broken.

9. Box according to any one of the preceding claims, wherein the abutment means has at least one abutment arm projecting from the tearing strip, at the end of which abutment arm an abutment member, such as an anchoring tooth, has been provided, wherein the abutment means preferably has two abutment arms extending in opposite direction, and/or wherein the arm preferably is resilient, and/or wherein the arm preferably is concave the concave side facing away from the bottom.

10. Box according to claim 9, wherein the retaining means for the abutment means form a meshing, wherein the meshing preferably is active in a blocking manner in a direction towards the bottom and not in opposite direction, wherein the retaining means preferably comprise a lip on the abutment means, preferably a resilient lip, provided with a tooth, and one or more counter teeth on the circumferential wall of the box.

11. Box according to claim 10 and claim 3, wherein the counter teeth on the box may also be active on the lip.

12. Box according to claim 9, wherein the retaining means are situated in between the abutment members.

13. Box according to any one of the preceding claims, wherein the abutment means has been connected to the tearing strip by means of a connection that can be broken.

14. Box for electric wirings, comprising a bottom wall and a circumferential wall, as well as securing means for securing the box in or on a wall, wherein the circumferential wall has been provided with retaining means for keeping the securing means in a desired active position, wherein the securing means comprise an abutment means for in the active position thereof abutting the rear side of a hollow wall, retained against displacement towards the bottom by the retaining means, wherein the abutment means has been arranged near an end of a tearing strip, which tearing strip has been provided with a pulling end, for by pulling the tearing strip bringing the abutment means in the said active position, wherein the abutment means has at least one abutment arm projecting from the tearing strip, at the end of which abutment arm an abutment member, such as for instance an anchoring tooth, has been provided.

15. Box according to claim 14, wherein the abutment means has two abutment arms extending in opposite direction, and/or wherein the arm is resilient, and/or wherein the arm is concave the concave side facing away from the bottom, and/or wherein the retaining means for the abutment means form a meshing, wherein the meshing preferably is active in a blocking manner in a direction towards the bottom and not in opposite direction.

16. Box for electric wirings, comprising a bottom wall and a circumferential wall, as well as securing means for securing the box in or on a wall, wherein the circumferential wall has been provided with retaining means for keeping the securing means in a desired active position, wherein the securing means comprise a first securing means in the form of an abutment means for in the active position thereof abutting the rear side of a hollow wall, retained against displacement towards the bottom by the retaining means, wherein the abutment means has been arranged near an end of a tearing strip, which tearing strip has been provided with a second securing means which in cooperation with mortar applied next to the circumferential wall keeps the box in an installation hole.

17. Box according to claim 16, wherein the second securing means forms a framework, and/or wherein the retaining means for the second securing means form a meshing, wherein the meshing preferably is active in a blocking manner in a direction towards the bottom and not in opposite direction.

18. Box according to claim 17, wherein the retaining means comprises a lip on the framework, preferably a resilient lip, provided with a tooth, and one or more counter teeth on the circumferential wall of the box.

19. Box according to any one of the claims 16-18, wherein the framework has been provided with a damming edge oriented away from the bottom.

20. Box according to any one of the claims 16-19, wherein the framework has been provided with one or more protrusions extending substantially in circumferential direction, which protrusions form a support surface for a finger, wherein the protrusions for pulling preferably have a concave edge facing the bottom.

21. Box according to claim 19 or 20, wherein the protrusions project on both sides of the framework.

22. Box according to claim 20 or 21, wherein the protrusion has a curvature along with the circumferential wall, and/or wherein the protrusions are resilient in a plane parallel to the bottom.

23. Box according to any one of the claims 16-22, wherein the framework is situated at the pulling end of the tearing strip, wherein the framework preferably is detachably connected to the rest of the tearing strip.
